# EUROPEAN PATENT SPECIFICATION

(11) **EP 3 012 783 B1**
(45) Date of publication and mention of the grant of the patent: **27.09.2017**
(21) Application number: 15002201.0
(22) Date of filing: 10.12.2012
(51) Int. Cl.: G06K 13/08, G06K 7/08

(54) **ANTI SKIMMING AND ANTI SHIMMING CARD FEED UNIT, KERNEL ELEMENT, READ OUT UNIT, TRANSACTION MACHINE AND METHOD**
DIEBSTAHLVERHINDERNDE UND VIBRATIONSUNTERDRÜCKENDE KARTENZUFUHREINHEIT, AUSLESEEINHEIT, TRANSAKTIONSMASCHINE UND VERFAHREN DAFÜR
UNITÉ D'ALIMENTATION DE CARTE ANTI-ÉCRÉMAGE ET ANTI-CALAGE, ÉLÉMENT DE NOYAU, UNITÉ DE LECTURE, PROCÉDÉ ET MACHINE DE TRANSACTION

(30) Priority: 08.12.2011 NL 1039226; 27.03.2012 NL 2008553; 16.10.2012 NL 2009644
(43) Date of publication of application: 27.04.2016
(62) Divisional of application: 12824883.8
(73) Proprietor: Card Swipe Protection Technology B.V., 3991 AS Houten (NL)
(72) Inventor: Goedee, Cornelis Johannes, 3991 AS Houten (NL); Van Den Bogart, Leonardus Antonius Maria, 3991 AS Houten (NL); De Jongh, Marina Helena, 3991 AS Houten (NL)
(74) Representative: Hoeben, Ferdinand Egon

(56) References cited:
- WO-A1-2005/109326

## Description

The present invention relates to an anti-skimming or anti-shimming device for placement inside of a card reader for providing protection adjacent to either a magnetic stripe reading head or a chip reading head by providing a sheet of protective material, the device being fit-able or retrofit-able through the card slot of the card reader. Furthermore, the present invention relates to a transaction machine, such as a payment device or an automated teller machine ATM, for performing of transactions while using a payment card, comprising an anti-skimming or anti-shimming device. Furthermore, the present invention relates to a method for safely performing transactions while using an anti-skimming or anti-shimming device according to the present invention.

WO 2005/109326 discloses a configuration intended to prevent skimming by providing safety features to the exterior surface configuration, which prevents the placement of a skimming reader over the top of the card reader housing. As far as this provides the outside safety, the present inventors had as an insight that tampering inside card reader was a next problem.

The present invention provides an anti-skimming or anti-shimming device for placement inside of a card reader for providing protection adjacent to either a magnetic stripe reading head or a chip reading head by providing a sheet of protective material, the sheet of protective material being functional in blocking space between the official reading head and a front plate of the card reader.

An advantage of such a preferred embodiment is that space between the official reading head and from plate of the card reader is blocked.

According to a preferred embodiment, in the anti-skimming or anti-shimming device the sheet of protective material comprises a metal material. Further preferably, the sheet of protective material comprises a plastic material. Further preferably, the sheet of protective material comprises a reinforcement, such as fiber, preferably glass fiber.

According to a further preferred embodiment, the sheet of protective material is placeable on the inside of an existing card reader.

Further preferably, the sheet of protective material is placeable on the inside of an existing card reader without opening the card reader or even accessing secure parts thereof.

According to a further preferred embodiment, the device comprises a blocking member for keeping the device safely in the card reader. Further preferably, such blocking member comprises a biasing property, preferably imparted by the metal the device is made of. Further preferably, the blocking member is designed depending on internal parts of the card reader to be used.

Further preferably, the anti-skimming or anti-shimming device comprises one way blocking members, such as latches, preventing unlatching.

Further preferably, the device is fit-able or retrofit-able through the card slot of the card reader.

According to a further preferred embodiment, the anti-skimming or anti-shimming device has a size marginally narrower than the width of the card to be inserted into the card reader, preferably having positioning members slightly extending beyond the size of the card.

A further aspect of the present invention relates to a transaction machine, such as a payment device or an automated teller machine ATM, for performing of transactions while using a payment card, comprising a read out unit for reading out of card information from a data carrier of a payment card and comprising an anti-skimming or anti-shimming device according to the present invention. In light of the above, this card reading unit will achieve advantages as indicated.

A further aspect of the present invention provides a method for safely performing transactions while using an anti-skimming or anti-shimming device according to the present invention and a transaction machine according to the present invention, the method comprising steps for:
- providing of the transaction machine with an anti-skimming or anti-shimming device placed in the card reader such that the sheet of protective material is functional in blocking space between the official reading head and a front plate of the card reader,
- allowing a user to use the transaction machine for performing a transaction. This card reading unit there will achieve advantages as indicated.

Further advantages, features and details of the present invention will be described in greater detail with reference to the annexed drawings and based one or more preferred embodiments. The drawings show as follows. Similar, yet not necessarily identical parts of several preferred embodiments are referred to with the same reference numerals.

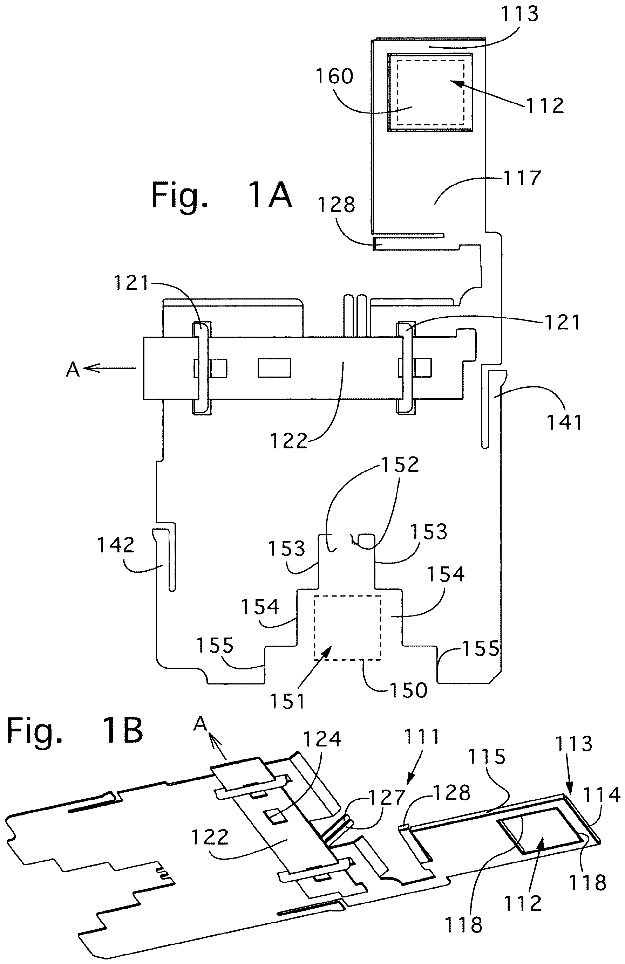

Fig. 1A,B show respective views of a further embodiment according to the present invention.

Within the scope of this text, the following definitions apply.

Card information is intended to mean information storable in a data carrier to be read by the card reader, such as for performing card transactions.
A direction substantially perpendicular to the reading direction of the card means that the direction is substantially excluding a direction running parallel to the reading direction of a card. Therefore, the direction substantially perpendicular to the reading direction of the card may have at least two directional components that are not parallel to this reading direction. If the reading direction is generally in the direction of an X-axis, 2 directional components substantially perpendicular to the reading direction may comprise direction components generally in the direction of a Y-axis, and or a Z-axis or a combined direction of movement.

The use of magnetic data storage card has become ubiquitous throughout the world. Examples of such cards include credit cards, debit cards, bank cards, ATM cards, security guards, identity cards, driver licenses, etc. Such a card has standardized shape and dimensions, and stores the data in parallel tracks within a magnetic strip. The location and orientation of the strip on the card are also standardized. In operational use, the data stored in the magnetic strip of the card is read by swiping or otherwise transporting the card past a reading head of a card reader in the user interface of a computerized secure system. The user interface typically has a card slot that is dimensioned in order to have the card inserted in such an orientation that the magnetic strip is transported past the reading head by the user's inserting the card. The system processes the data thus read together with a personal identification number (PIN) or other password, entered by the card's owner into the system via a keyboard and/or touch screen in the system's user interface.

The term "skimming" refers to the theft of secure information stored in the magnetic strip of a credit card, a debit card, a bank card, ATM card, a security card, an identity card, etc., while the card is being used in a normal legitimate transaction. In a practical scenario, a thief places a small electronic device, referred to as a "skimmer", at or over the card feed slot of an ATM. For example, a skimmer is accommodated in a false front overlying the card slot of a dip card reader or of a motorized reader.

As another example, a skimmer is positioned within or at one or at both extremities of the channel of a swipe card reader, e.g., by means of using a false front cover accommodating the skimmer's reading head. The channel is wider at the extremity than at the position of the reading head so as to facilitate feeding the card into the channel him being swiped. The skimmer reads the magnetic strip as the user unknowingly passes his/her card through it. These skimming devices are often used in conjunction with a pinhole camera to read the user's PIN at the same time. The skimming device stores the data read or instantly transmits the data via a wireless connection to the thief. The information thus stolen can then be used by the thief to assume the card owner's identity for, e.g., obtaining goods without paying, withdrawing money from the card owner's bank account, obtaining access to gated premises, etc.

A further embodiment of the present invention is related to an internal protection member 111 (Fig. 1A, B) to be placed inside a card reader. An important advantage of the internal protection member 111 is that it may be placed on the inside of an existing card reader, without opening the card reader or even accessing secure parts thereof. One reason for this is that the internal protection member may be inserted into the card reader, when the card reader remains closed through the card insertion slot, or maybe oriented on the inside during assembly or production of a card reader. The objective of this embodiment is to protect weak spots of the internal space of card readers.

For reading out the magnetic stripe of a transaction card, such readers possess a magnetic stripe reading head 160 at the front side thereof. In terms of Fig. 1, the reading head would be located within the opening 112 when the device 111 is inserted into the card reader. A skimmer would try to place a skimming reading head at the location of the bridging part 113 of the card reader. It is the main objective of the present embodiment in light of such undesired positioning of a skimming reading head to block this space between the official reading head and a front plate (not shown) of the card reader.

This is made possible as the device 111 is blocking this space and produced from preferably a difficult to destruct metal. Preferably, a blade spring metal is used. The bridging part 113 is preferably reinforced by ridges 114 and 118 than from the same plate material. A further reinforcing rib 115 is used to reinforce plates part 117.

Preferably a patch of adhesive material 116 is used for fastening the device to an internal part to be determined of the card reader. Depending on the card reader that the device 111 is used in, adhesive patches may be applied elsewhere.

Blocking members 127, 128, preferably with biasing properties, such as biasing properties imparted by the metal the device is made of, are the designed depending on internal parts of the card reader to be used. The same number, less or more may be applied in each instance. The optional blocking members may fulfill the purpose of keeping the device safely into the card reader, the purpose of guiding the device into the card reader.

An optional movable blocking member 122, such as a latch, is used for locking the device into the card reader and a nonreturnable way. After inserting the device into the card reader through the slot of the cards, the device is optionally pressed down and glued, and thereafter, latch may be moved sideways to prevent removal of the device. Unlatching may be prevented by one-way blocking members 124, such as pushed out plate material, that may slide in one direction through the latch guides 121 in the direction of the arrow A. The location of such a latch may be dependent on the location of suitable gripping parts on the inside of the card reader.

Positioning members 141,142 with a biasing property for biasing point shaped ends thereof outwardly are provided for precisely positioning the device 111 into place in the space inside the card reader, partially also by defining the side to side positioning of the device. preferably, the device is marginally narrower that the width of the card to be inserted into the card reader with the said points slightly extending beyond the size of a card for both allowing the device in any regular card reader and providing a positioning and fixing capacity to the device by the positioning members. Member 142 preferably has a higher biasing force to force the device toward the side of member 141 or member 141 has no biasing force, and member 141 preferably enters a recess of the inside of the card reader for blocking the device relative to the recess inside of the card reader.

The other longitudinal end with the stepped opening or recess 151 formed by the stepped wall parts 153, 154, 155 from narrow to wide is provided for encompassing the chip reader from the card reader equipped with at least a chip reader or also the magnetic stripe reader. The protrusions 152 provide support for the device 111 during placement and during regular use in an example of a card reader.

This part of the device provides for an anti shimming function as, when the device is provided in front of the chip reader, functionally placing a shimming device to shim the data from the chip is hampered by the presence of the device. A shimming device intends to provide for a thin component to be placed between the reading head 150 contacts and the contacts of the card chip, letting both the signals of the chip through to the reader and back and providing means to also lead those signals to electronics sending shimming control signals to the chip.

As the device is located adjacent to the chip reading head, the shimming device has no space left to allow for co-locating both, thereby effectively blocking the chip shimming option. The through put opening of the card reader is normally quite spacious for allowing through a card without any hindrance. The device 111 limits the card entry opening in order to prevent shimming or skimming devices to be put through the card opening as e.g. a form of inlay.

The shape of the device at any part thereof may be adapted to specific card reader interiors in light of the defined functions.

Anti-skimming or anti-shimming device for placement inside of a card reader for providing protection adjacent to either a magnetic stripe reading head or a chip reading head by providing a sheet of protective material, such as a metal material or a preferably reinforced plastic material, such as fiber, preferably glass fiber reinforced, the device being fit-able or retrofit-able through the card slot of the card reader, and preferably providing any means as individually defined and individually described in the above description and annexed drawings.

A further example definition of shimming is worded as follows: shimming works by compromising a perfectly legitimate card reader (like a Pin Pad) by inserting a very thin flexible circuit board through the card slot that will stick to the internal contacts that read card data. The shim is inserted using a "carrier card" that holds the shim, inserts it into the card slot and locks it into place on the internal reader contacts. The carrier card is then removed. Once inserted, the shim is not visible from the outside of the machine. The shim then performs a so called man-in-the-middle attack between an inserted credit card and the circuit board of the Pin Pad machine. See the image below for an example of what a skim looks like inside the Pin Pad. The term skimming is sometimes also used for what has been indicated as shimming in the above, e.g. for obtaining data from the chip in addition to obtaining information from the magnetic stripe.

In the above, the present invention is described with reference to one or more preferred embodiments. Several aspects of several distinct preferred embodiments are described in the above. Furthermore, the features of distinct embodiments are deemed described in combination with each other in order to provide a description of all combinations that are considerable within the scope of this description by an expert of the field. The above disclosure these preferred embodiments are not limiting to the scope of protection of this document. The rights sought are determined in the annexed claims.

## Claims

1. Anti-skimming or anti-shimming device (111) for placement inside of a card reader for providing protection adjacent to either a magnetic stripe reading head (160) or a chip reading head (150) by providing a sheet of protective material, the sheet of protective material being functional in blocking space between the official reading head and a front plate of the card reader.

2. Anti-skimming or anti-shimming device according to claim 1, in which the sheet of protective material comprises a metal material.

3. Anti-skimming or anti-shimming device according to claim 1 or 2 in which the sheet of protective material comprises a plastic material.

4. Anti-skimming or anti-shimming device according to one or more of the preceding claims in which the sheet of protective material comprises a reinforcement (115), such as fiber, preferably glass fiber.

5. Anti-skimming or anti-shimming device according to any of the preceding claims, the sheet of protective material being placeable on the inside of an existing card reader.

6. Anti-skimming or anti-shimming device according to claim 5 in which the sheet of protective material is placeable on the inside of an existing card reader without opening the card reader or even accessing secure parts thereof.

7. Anti-skimming or anti-shimming device according to any of the preceding claims, the device being fit-able or retrofit-able through the card slot of the card reader.

8. Anti-skimming or anti-shimming device according to any of the preceding claims comprising a patch of adhesive material (116) for fastening the device to a predetermined internal part of the card reader.

9. Anti-skimming or anti-shimming device according to any of the preceding claims comprising a blocking member (122,127,128) for keeping the device safely in the card reader.

10. Anti-skimming or anti-shimming device according to claim 9 in which the blocking member comprises a biasing property, preferably imparted by the metal the device is made of.

11. Anti-skimming or anti-shimming device according to claim 9 or 10, in which the blocking member is designed depending on internal parts of the card reader to be used.

12. Anti-skimming or anti-shimming device according to any of the preceding claims comprising one way blocking members (122), such as latches, preventing unlatching.

13. Anti-skimming or anti-shimming device according to any of the preceding claims having a size marginally narrower than the width of the card to be inserted into the card reader, preferably having positioning members slightly extending beyond the size of the card.

14. Transaction machine, such as a payment device or automated teller machine, ATM, for performing all transactions while using a payment card, comprising a readout unit for reading out of card information from a data carrier of a payment card and **characterized in that** it is comprising an anti-skimming or anti-shimming device (111) according to any of the preceding claims.

15. Method for safely performing transactions while using an anti-skimming or anti-shimming device (111) according to any of the preceding claims 1-13 and a transaction machine according to claim 14, the method comprising steps for:
- providing the transaction machine with the anti-skimming or anti-shimming device (111) placed in the card reader such that the sheet of protective material is functional in blocking space between the official reading head and a front plate of the card reader,
- allowing a user to use the transaction machine for performing a transaction.

## Patentansprüche

1. Anti-Skimming- oder Anti-Shimming-Vorrichtung (111) zur Platzierung in einem Kartenleser zum Schutz eines benachbarten Magnetstreifen-Lesekopfes (160) oder eines Chip-Lesekopfes (150) durch Bereitstellung einem Blatt aus Schutzmaterial, die dazu dient, den Raum zwischen dem offiziellen Lesekopf und der Frontplatte des Kartenlesers zu blockieren.

2. Anti-Skimming- oder Anti-Shimming-Vorrichtung nach Anspruch 1, in dem das Blatt aus Schutzmaterial ein Metallmaterial umfasst.

3. Anti-Skimming- oder Anti-Shimming-Vorrichtung nach Anspruch 1 oder 2, in dem das Blatt aus Schutzmaterial ein Kunststoffmaterial umfasst.

4. Anti-Skimming- oder Anti-Shimming-Vorrichtung nach einem oder mehreren vorstehenden Ansprüchen, in dem das Blatt aus Schutzmaterial eine Verstärkung (115), wie z. B. aus Faser, vorzugsweise Glasfaser, umfasst.

5. Anti-Skimming- oder Anti-Shimming-Vorrichtung nach einem der vorstehenden Ansprüche, wobei das Blatt aus Schutzmaterial auf der Innenseite eines vorhandenen Kartenlesers platziert wird.

6. Anti-Skimming- oder Anti-Shimming-Vorrichtung nach Anspruch 5, wobei das Blatt aus Schutzmaterial auf der Innenseite eines vorhandenen Kartenlesers platziert wird, ohne dass der Kartenleser geöffnet oder auf die gesicherten Teile zugegriffen wird.

7. Anti-Skimming- oder Anti-Shimming-Vorrichtung nach einem der vorstehenden Ansprüche, wobei die Vorrichtung durch den Kartenschacht des Kartenlesers eingesetzt werden kann oder der Kartenleser auf diese Art nachgerüstet werden kann.

8. Anti-Skimming- oder Anti-Shimming-Vorrichtung nach einem der vorstehenden Ansprüche, das ein Stück Haftmaterial (116) umfasst, das zur Befestigung des Moduls an einem vorgegebenen Innenteil des Kartenlesers dient.

9. Anti-Skimming- oder Anti-Shimming-Vorrichtung nach einem der vorstehenden Ansprüche, das ein Sperrglied (122,127,128) umfasst, welches gewährleistet, dass die Vorrichtung sicher im Kartenleser verbleibt.

10. Anti-Skimming- oder Anti-Shimming-Vorrichtung nach Anspruch 9, bei dem das Sperrglied eine Vormagnetisierungseigenschaft umfasst, die vorzugsweise von dem Metall stammt, aus dem die Vorrichtung besteht.

11. Anti-Skimming- oder Anti-Shimming-Vorrichtung nach Anspruch 9 oder 10, bei dem das Sperrglied im Hinblick auf die Innenteile des zu verwendenden Kartenlesers entworfen wird.

12. Anti-Skimming- oder Anti-Shimming-Vorrichtung nach einem der vorstehenden Ansprüche, das einseitige Sperrglieder (122), wie z. B. Riegel umfasst, die eine Entriegelung verhindern.

13. Anti-Skimming- oder Anti-Shimming-Vorrichtung nach einem der vorstehenden Ansprüche, das etwas schmaler ist als die Breite der in den Kartenleser einzuführenden Karte, und vorzugsweise über Positionierelemente verfügt, die etwas größer als die Karte sind.

14. Transaktionsgerät, wie z. B. ein Bezahlgerät oder ein Geldautomat (ATM) zur Durchführung aller Transaktionen mit einer Zahlungskarte, das eine Ausleseeinheit zum Auslesen von Karteninformationen des Datenträgers einer Zahlungskarte umfasst und sich dadurch auszeichnet, dass es eine Anti-Skimming- oder Anti-Shimming-Vorrichtung (111) nach einem der vorstehenden Ansprüche umfasst.

15. Verfahren zur sicheren Durchführung von Transaktionen unter Verwendung eines Anti-Skimming- oder Anti-Shimming-Moduls (111) nach einem der vorstehenden Ansprüche 1 - 13 und einem Transaktionsgerät nach Anspruch 14, das folgende Schritte umfasst, um:
- das Transktionsgerät mit dem im Kartenleser platzierte Anti-Skimming- oder Anti-Shimming-Vorrichtung (111) so zu versehen, dass das Blatt aus Schutzmaterial den Raum zwischen dem offiziellen Lesekopf und der Frontplatte des Kartenlesers blockiert,
- es einem Benutzer zu erlauben, das Transaktionsgerät zur Durchführung einer Transaktion zu verwenden.

## Revendications

1. Dispositif anti-duplication et anti-calage (111) destiné à être placé dans un lecteur de cartes dans le but de fournir une protection à proximité d'une tête de lecture de bande magnétique (160) ou d'une tête de lecture de puce (150) en insérant une feuille de matériau de protection, ladite feuille de matériau de protection étant opérationnelle en bloquant l'espace situé entre la tête de lecture et la plaque de façade du lecteur de cartes.

2. Dispositif anti-duplication et anti-calage selon la revendication 1 **caractérisé en ce que** la feuille de matériau de protection comprend un matériau métallique.

3. Dispositif anti-duplication et anti-calage selon la revendication 1 ou 2 **caractérisé en ce que** la feuille de matériau de protection comprend un matériau plastique.

4. Dispositif anti-duplication et anti-calage selon l'une quelconque des revendications précédentes **caractérisé en ce que** la feuille de matériau de protection comprend un renfort (115) tel que des fibres, avantageusement des fibres de verre.

5. Dispositif anti-duplication et anti-calage selon l'une quelconque des revendications précédentes **caractérisé en ce que** la feuille de matériau de protection présente la possibilité de se placer à l'intérieur d'un lecteur de cartes existant.

6. Dispositif anti-duplication et anti-calage selon la revendication 5 **caractérisé en ce que** la feuille de matériau de protection présente la possibilité de se placer à l'intérieur d'un lecteur de cartes existant sans avoir à ouvrir le lecteur de cartes ou même accéder aux composants sécurisés de ce dernier.

7. Dispositif anti-duplication et anti-calage selon l'une quelconque des revendications précédentes **caractérisé en ce que** ce dispositif est adaptable ou ajustable à travers la fente de carte du lecteur de carte.

8. Dispositif anti-duplication et anti-calage selon l'une quelconque des revendications précédentes **caractérisé en ce que** le dispositif comprend un patch adhésif (116) destiné à fixer ledit dispositif à une partie prédéterminée du lecteur de carte.

9. Dispositif anti-duplication et anti-calage selon l'une quelconque des revendications précédentes **caractérisé en ce que** le dispositif comprend un élément de blocage (122, 127, 128) destiné à maintenir le dispositif fixé à l'intérieur du lecteur de cartes.

10. Dispositif anti-duplication et anti-calage selon la revendication 9 **caractérisé en ce que** l'élément de blocage présente une propriété de polarisation, de préférence transmise par le métal dont le dispositif est constitué.

11. Dispositif anti-duplication et anti-calage selon la revendication 9 ou 10 **caractérisé en ce que** l'élément de blocage est conçu en fonction des composants internes du lecteur de cartes à utiliser.

12. Dispositif anti-duplication et anti-calage selon l'une quelconque des revendications précédentes **caractérisé en ce que** le dispositif comprend des éléments de blocage à sens unique (122), tels que des verrous, empêchant le déverrouillage.

13. Dispositif anti-duplication et anti-calage selon l'une quelconque des revendications précédentes **caractérisé en ce que** le dispositif présente une taille légèrement plus étroite que la largeur de la carte à insérer dans le lecteur de cartes et comporte avantageusement des éléments de positionnement dépassant légèrement de la taille de la carte.

14. Machine de transaction, telle qu'un dispositif de paiement, un guichet automatique ou un distributeur automatique de billets, destinée à effectuer toutes les transactions utilisant une carte de paiement, comprenant une unité de lecture pour lire les informations de la carte à partir du support de données de ladite carte de paiement et **caractérisée en ce qu'**elle comprend un dispositif anti-duplication et anti-calage (111) selon l'une quelconque des revendications précédentes.

15. Procédé pour effectuer des transactions en toute sécurité lors de l'utilisation d'un dispositif anti-duplication et anti-calage (111) selon l'une quelconque des revendications précédentes 1 à 13 et d'une machine de transaction selon la revendication 14, procédé comprenant des étapes pour :
- équiper la machine de transaction du dispositif anti-duplication et anti-calage (111) placé dans le lecteur de cartes de façon à ce que la feuille de matériau de protection soit opérationnelle dans l'espace de blocage situé entre la tête de lecture officielle et la plaque de façade du lecteur de cartes ;
- permettre à un utilisateur de se servir de la machine de transaction pour effectuer une transaction.
